# EUROPEAN PATENT APPLICATION

(11) **EP 4 561 043 A1**
(43) Date of publication of application: **28.05.2025**
(21) Application number: 23948667.3
(22) Date of filing: 28.09.2023
(51) Int. Cl.: H04M 11/00

(54) **ABNORMALITY DETECTION SYSTEM, ABNORMALITY DETECTION METHOD, AND PROGRAM**

(71) Applicant: Rakuten Group, Inc., Setagaya-ku Tokyo 158-0094 (JP)
(72) Inventor: FUJIOKA, Kengo, Tokyo 158-0094 (JP); FUJII, Taisuke, Tokyo 158-0094 (JP); NISHIMURA, Ryo, Tokyo 158-0094 (JP); HASEGAWA, Daichi, Tokyo 158-0094 (JP)
(74) Representative: EIP
(86) International application number: PCT/JP2023/035439
(87) International publication number: WO 2025/069315

(57) **Abstract**

A post data acquisition module (101) of an anomaly detection system (1) acquires each of a plurality of pieces of post data in a social networking service (SNS). A post-relevant service identification module (102) identifies a post-relevant service that is relevant to each of the plurality of pieces of post data out of a plurality of services being targets of anomaly detection. A sentiment analysis execution module (103) executes sentiment analysis for each of the plurality of pieces of post data. An anomaly detection module (104) detects an anomaly relating to each of the plurality of services based on the post-relevant service identified for each of the plurality of pieces of post data and a result of the sentiment analysis executed for each of the plurality of pieces of post data.

## Description

### Technical Field

The present disclosure relates to an anomaly detection system, an anomaly detection method, and a program.

### Background Art

Hitherto, a technology for detecting an anomaly relating to a service used by a user has been investigated. For example, in Patent Literature 1, there is described an anomaly detection device which determines whether or not post data in a social networking service (SNS) includes a negative expression. The anomaly detection device as described in Patent Literature 1 determines that post data including a predetermined keyword does not include a negative expression. The anomaly detection device as described in Patent Literature 1 detects an anomaly when the number of posts each including the negative expression at a current time has increased by a predetermined threshold value or more from the number of posts each including the negative expression at a predetermined past time.

### Citation List

### Patent Literature

[PTL 1] JP 2014-154051 A

### Summary of Invention

### Technical Problem

However, the anomaly detection device as described in Patent Literature 1 is intended to detect an anomaly in one certain service, and hence cannot be applied to a case in which a plurality of services, which are detection targets of the anomaly, exist. Thus, the anomaly detection device as described in Patent Literature 1 cannot detect, in the case in which a plurality of services being the detection targets of the anomaly exist, an anomaly relating to each of the plurality of services based on each of a plurality of pieces of post data in the SNS.

One object of the present disclosure is to appropriately detect an anomaly relating to each of a plurality of services, which are targets of anomaly detection.

### Solution to Problem

An anomaly detection system according to one embodiment of the present disclosure includes: a post data acquisition module configured to acquire each of a plurality of pieces of post data in a social networking service (SNS); a post-relevant service identification module configured to identify a post-relevant service that is relevant to each of the plurality of pieces of post data out of a plurality of services being targets of anomaly detection; a sentiment analysis execution module configured to execute sentiment analysis for each of the plurality of pieces of post data; and an anomaly detection module configured to detect an anomaly relating to each of the plurality of services based on the post-relevant service identified for the each of the plurality of pieces of post data and a result of the sentiment analysis executed for the each of the plurality of pieces of post data.

### Advantageous Effects of Invention

According to the present disclosure, the anomaly relating to each of the plurality of services being targets of anomaly detection can be appropriately detected.

### Brief Description of Drawings

FIG. 1 is a diagram for illustrating an example of a hardware configuration of an anomaly detection system.
FIG. 2 is a table for showing an example of a post database in which post data is stored.
FIG. 3 is a graph for showing an example of time-series changes in negative post counts.
FIG. 4 is a view for illustrating an example of an administrator screen displayed on a management tool.
FIG. 5 is a diagram for illustrating an example of functions implemented in the anomaly detection system.
FIG. 6 is a table for showing an example of a dictionary database.
FIG. 7 is a table for showing an example of an anomaly detection database.
FIG. 8 is a flowchart for illustrating an example of processing executed in the anomaly detection system.
FIG. 9 is a diagram for illustrating an example of functions implemented in an anomaly detection system in modification examples.

### Description of Embodiments

### [1. Hardware Configuration of Anomaly Detection System]

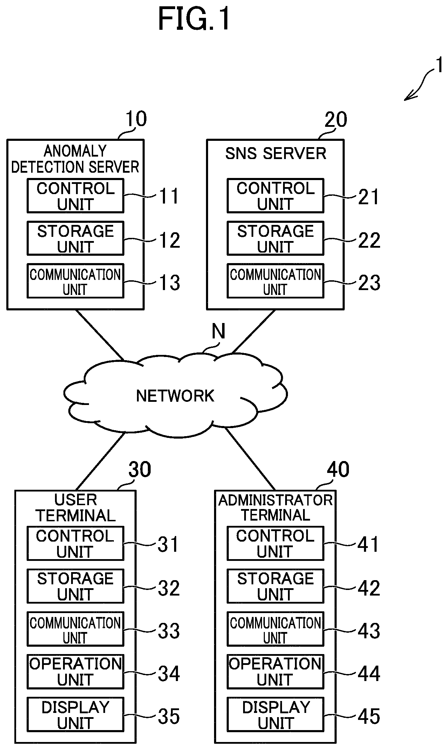

Description is now given of an example of an embodiment of an anomaly detection system, an anomaly detection method, and a program according to the present disclosure. FIG. 1 is a diagram for illustrating an example of a hardware configuration of the anomaly detection system. For example, an anomaly detection system 1 includes an anomaly detection server 10, a social networking service (SNS) server 20, a user terminal 30, and an administrator terminal 40. Each of the anomaly detection server 10, the SNS server 20, the user terminal 30, and the administrator terminal 40 can be connected to a network N. The network N is, for example, the Internet, a public communication line, or a LAN.

The anomaly detection server 10 is a server computer. In this embodiment, the anomaly detection server 10 is managed by an administrator which is responsible for anomaly detection. The administrator may be an operating company of a service being a target of the anomaly detection or another party different from the operating company of the service. For example, the anomaly detection server 10 includes a control unit 11, a storage unit 12, and a communication unit 13. The control unit 11 includes at least one processor. The storage unit 12 includes at least one of a volatile memory such as a RAM or a nonvolatile memory such as a flash memory. The communication unit 13 includes at least one of a communication interface for wired communication or a communication interface for wireless communication.

The SNS server 20 is a server computer. The SNS server 20 is managed by an operating company of an SNS. In this embodiment, a case in which the operating company of the SNS is a party different from the administrator is exemplified, but the operating company of the SNS may be the same party as the administrator. For example, the SNS server 20 includes a control unit 21, a storage unit 22, and a communication unit 23. Hardware configurations of the control unit 21, the storage unit 22, and the communication unit 23 may be the same as those of the control unit 11, the storage unit 12, and the communication unit 13, respectively.

The user terminal 30 is a user computer of a user who uses at least one of a plurality of services, which are the targets of the anomaly detection, and the SNS. The user may use all of the plurality of services or only a part of the services. Each of the plurality of services is provided by a computer not shown in FIG. 1. This computer is connected to the network N. For example, the user operates the user terminal 30 to connect to this computer, to thereby use the service. The user may use the service without particularly operating the user terminal 30.

For example, the user terminal 30 is a smartphone, a tablet computer, a personal computer, or a wearable terminal. For example, the user terminal 30 includes a control unit 31, a storage unit 32, a communication unit 33, an operation unit 34, and a display unit 35. Hardware configurations of the control unit 31, the storage unit 32, and the communication unit 33 may be the same as those of the control unit 11, the storage unit 12, and the communication unit 13, respectively. The operation unit 34 is an input device, such as a touch panel or a mouse. The display unit 35 is a display, such as a liquid crystal display or an organic EL display.

The administrator terminal 40 is a computer of the administrator. For example, the administrator terminal 40 is a smartphone, a tablet computer, a personal computer, or a wearable terminal. For example, the administrator terminal 40 includes a control unit 41, a storage unit 42, a communication unit 43, an operation unit 44, and a display unit 45. Hardware configurations of the control unit 41, the storage unit 42, the communication unit 43, the operation unit 44, and the display unit 45 may be the same as those of the control unit 11, the storage unit 12, the communication unit 13, the operation unit 34, and the display unit 35, respectively.

Programs stored in the storage units 12, 22, 32, and 42 may be supplied via the network N. Moreover, each computer may include at least one of a reading unit (for example, a memory card slot) for reading a computer-readable information storage medium or an input/output unit (for example, a USB port) for inputting/outputting data from/to an external device. For example, a program stored in an information storage medium may be supplied via at least one of the reading unit or the input/output unit.

Moreover, the anomaly detection system 1 is only required to include at least one computer. The computer included in the anomaly detection system 1 is not limited to the example of FIG. 1. For example, the anomaly detection system 1 may include only the anomaly detection server 10. In this case, each of the SNS server 20, the user terminal 30, and the administrator terminal 40 exists outside the anomaly detection system 1. The anomaly detection system 1 may include only the anomaly detection server 10 and the administrator terminal 40. In this case, each of the SNS server 20 and the user terminal 30 exists outside the anomaly detection system 1. The anomaly detection system 1 may include another computer not shown in FIG. 1.

### [2. Overview of Anomaly Detection System]

In this embodiment, the anomaly detection system 1 analyzes post data relating to a post in the SNS, to thereby detect an anomaly relating to each of the plurality of services. The anomaly is a state deviating from a predetermined criterion. The anomaly is a state in which the user cannot use the service or a state in which the user has difficulty in using the service. A failure is one form of the anomaly. The anomaly may include a state which subsequently develops into the failure.

The anomaly occurs in at least one of hardware or software used to provide the service. In the service, the anomaly possibly occurs in any hardware. For example, the anomaly possibly occurs in a server computer, a personal computer, a tablet computer, a smartphone, another computer, a communication device, a cable, a memory, a power supply, and other hardware. Regarding the software, the anomaly also possibly occurs in any software.

For example, when the anomaly occurs in a certain service, the user sometimes posts the occurrence of the anomaly in this service to the SNS. This post sometimes includes a negative expression relating to the service. Various posts are made to the SNS. Thus, even when the user makes a post including a negative expression, this post may not relate to the anomaly of the service. Further, even when the user makes a certain post relating to the service, this post may not relate to the anomaly of the service.

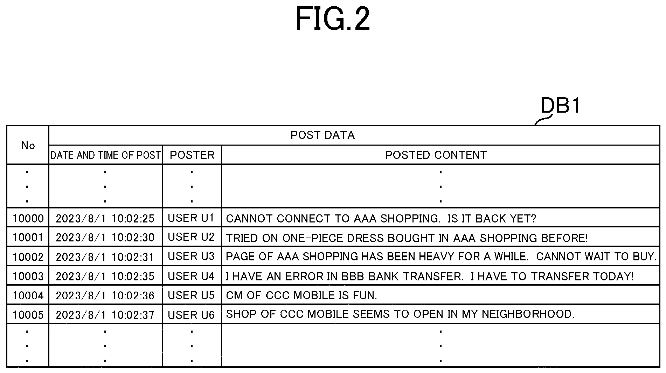

FIG. 2 is a table for showing an example of a post database in which the post data is stored. For example, the storage unit 12 of the anomaly detection server 10 stores a post database DB1. In the example of FIG. 2, in the post database DB1, post identification information (in FIG. 2, "No" indicating a record of the post database DB1) which allows identification of each piece of post data and the post data are stored in association with each other. The post data indicates post date and time, a poster, and posted content. The post database DB1 may be stored in the storage unit 22 of the SNS server 20.

For example, when the user operates the user terminal 30 to make a new post to the SNS, the SNS server 20 generates the post identification information on this new post. The SNS server 20 generates the post data indicating the post date and time being current date and time, a user who has made the post, and new posted content. The SNS server 20 records the generated post identification information and post data in association with each other in the storage unit 22. The anomaly detection server 10 acquires post data on various posts from the SNS server 20, and stores the acquired post data in the post database DB1.

For example, the anomaly detection server 10 determines whether or not the posted content indicated by the post data includes a word relevant to the service, to thereby determine whether or not this posted content is content relevant to this service. For example, when anomalies of three services of an online shopping service "AAA shopping," a financial service "BBB bank," and a communication service "CCC mobile" are to be detected, and certain posted content includes the name of one of those services, it is considered that the post relating to the service having the name is made.

For example, when a post relating to a certain service is made, the anomaly detection server 10 executes sentiment analysis relating to the posted content. In this embodiment, when the posted content includes a negative expression, the anomaly detection server increases a negative post count being the number of negative posts. The negative post count serves as an index for the anomaly detection. The negative post count is calculated for each service being the target of the anomaly detection. As the negative post count of a certain service is larger, a larger number of negative posts relating to this service is made in the SNS.

In this embodiment, the anomaly detection server 10 calculates the negative post count of each service for each totalization target period being a totalization target of the negative post count. A length of the totalization target period may be any length. For example, the totalization target period is 10 seconds, 30 seconds, 1 minute, 5 minutes, 10 minutes, 1 hour, or another length. The anomaly detection server 10 detects an anomaly based on a time-series change in the negative post count of each service in the totalization target period.

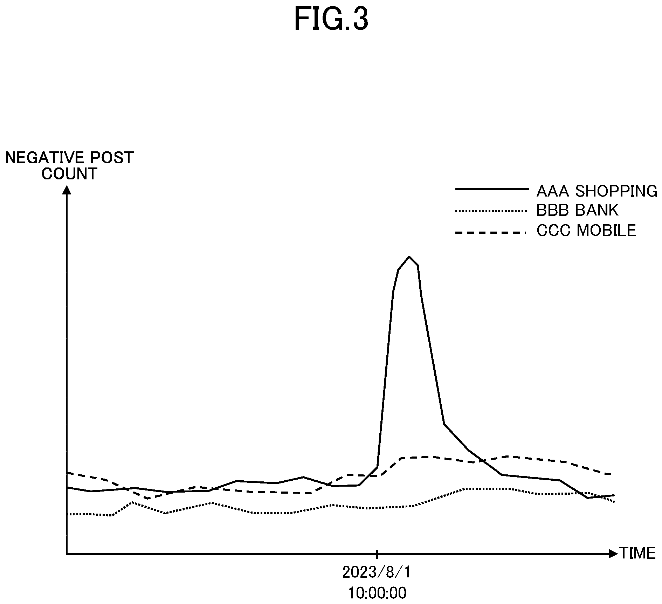

FIG. 3 is a graph for showing an example of time-series changes in negative post counts. In the example of FIG. 3, the case in which the number of services being the targets of the anomaly detection is three is exemplified. The number of services being the targets of the anomaly detection may be any number. The number of services being the targets of the anomaly detection is not limited to three. For example, the number of services being the targets of the anomaly detection may be two, or four or more. In this embodiment, the case in which the plurality of services are the targets of the anomaly detection is exemplified, but one service may be the target of the anomaly detection.

For example, the anomaly detection server 10 calculates the negative post count of each of the online shopping service "AAA shopping," the financial service "BBB bank," and the communication service "CCC mobile." In the example of FIG. 3, around 10 AM on August 1, 2023, the negative post count of the online shopping service "AAA shopping" drastically increases. The negative post count of each of the financial service "BBB bank" and the communication service "CCC mobile" does not change greatly.

In the case of the example of FIG. 3, the anomaly detection server 10 detects the anomaly of the online shopping service "AAA shopping" around 10 AM on August 1, 2023. The anomaly detection server 10 transmits, to the administrator terminal 40, a notification indicating the detection of the anomaly of the online shopping service "AAA shopping." When the administrator terminal 40 receives the notification, the administrator terminal 40 alerts the administrator. The administrator opens a management tool installed on the administrator terminal 40 to check a state of the online shopping service "AAA shopping."

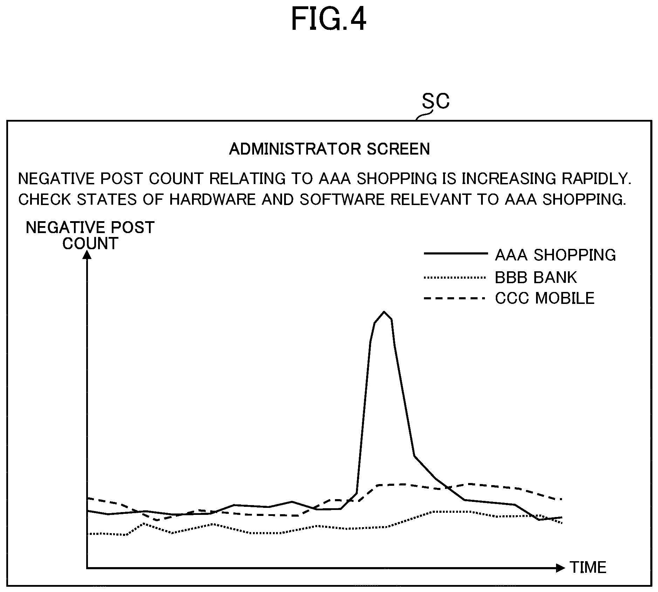

FIG. 4 is a view for illustrating an example of an administrator screen displayed on the management tool. For example, on an administrator screen SC, the time-series change in the negative post count in each service is displayed. After the administrator checks the administrator screen SC, the administrator checks the state of the online shopping service "AAA shopping," and executes recovery work as required. The recovery work for the anomaly which has occurred in the service may be executed through a publicly-known method. For example, the administrator checks, from the administrator screen SC, a CPU load rate, a memory usage amount, a communication amount, and the like of the server computer of the online shopping service "AAA shopping," to thereby execute maintenance work.

As described above, the anomaly detection system 1 identifies a service that is relevant to the posted content indicated by the post data out of the plurality of services. This service is hereinafter referred to as "post-relevant service." The anomaly detection system 1 executes sentiment analysis relating to the posted content indicated by the post data. The anomaly detection system 1 detects the anomaly based on an identification result of the post-relevant service and an execution result of the sentiment analysis. The anomaly detection system 1 can appropriately detect the anomaly relating to each of the plurality of services through use of the posts in the SNS. Details of the anomaly detection system 1 are now described.

### [3. Functions Implemented in Anomaly Detection System]

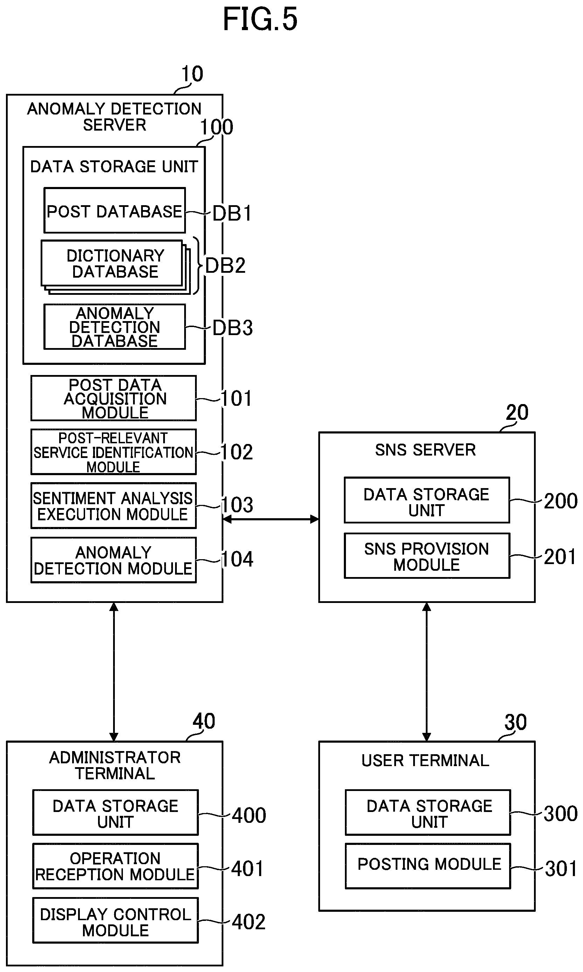

FIG. 5 is a diagram for illustrating an example of functions implemented in the anomaly detection system 1.

### [3-1. Functions Implemented in Anomaly Detection Server]

For example, the anomaly detection server 10 includes a data storage unit 100, a post data acquisition module 101, a post-relevant service identification module 102, a sentiment analysis execution module 103, and an anomaly detection module 104. The data storage unit 100 is implemented by the storage unit 12. Each of the post data acquisition module 101, the post-relevant service identification module 102, the sentiment analysis execution module 103, and the anomaly detection module 104 is implemented by the control unit 11.

### [Data Storage Unit]

The data storage unit 100 stores the post database DB1, a dictionary database DB2, and an anomaly detection database DB3. An example of the post database DB1 is as shown in FIG. 2. In the post database DB1, any data relating to the posts of the SNS may be stored. The data stored in the post database DB1 is not limited to the example of FIG. 2. For example, in the post database DB1, the post data in each of a plurality of SNSs may be stored. That is, the anomaly detection system 1 may analyze the post data in each of the plurality of SNSs, to thereby detect an anomaly of each of the plurality of services.

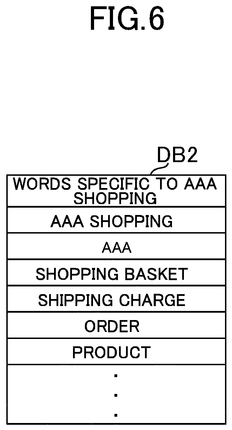

FIG. 6 is a table for showing an example of the dictionary database DB2. The dictionary database DB2 is a database in which words specific to the service are stored. The words specific to the service are words which enable estimation of the service. The word may be one word, or may be formed of a plurality of words. For example, the words specific to the service are a service name, an abbreviation of the service name, a name of a business operator which provides the service, an abbreviation of the business operator name, content of the service, and a place at which the service is provided.

In this embodiment, the data storage unit 100 stores the dictionary database DB2 of each of the plurality of services. That is, for each service, the dictionary database DB2 in which the words specific to this service are stored is prepared. For example, it is assumed that three dictionary databases of the dictionary database DB2 of the online shopping service "AAA shopping," the dictionary database DB2 of the financial service "BBB bank," and the dictionary database DB2 of the communication service "CCC mobile" are prepared.

In the example of FIG. 6, an example of the dictionary database DB2 of the online shopping service "AAA shopping" is shown. In the dictionary database DB2 of FIG. 6, words specific to the online shopping service "AAA shopping," such as "AAA shopping," "AAA," "shopping basket," "shipping charge," "order," and "product," are stored. The dictionary database DB2 may be prepared by the administrator, or may be prepared by another party. In the dictionary database DB2, words frequently appearing on product pages of the online shopping service "AAA shopping" may be registered.

For example, in the dictionary database DB2 of the financial service "BBB bank," words such as "BBB bank," "BBB," "bank transfer," "ATM," "online banking," and "bank" are stored. In the dictionary database DB2 of the communication service "CCC mobile, " words such as "CCC mobile, " "CCC, " "radio wave, " "smartphone," "base station," and "antenna" are stored. When another service is set as the target of the anomaly detection, in the dictionary database DB2 of this another service, words specific to this another service are stored. As described above, the data storage unit 100 stores the dictionary database DB2 of each of the plurality of services.

The dictionary databases DB2 of the plurality of services may be integrated into one dictionary database. In this case, it is assumed that, in this one integrated dictionary database DB2, service identification information which allows identification of a service to which each word is specific is stored. When a word stored in the one integrated dictionary database DB2 is included in the posted content indicated by certain post data, the post-relevant service identification module 102 described later refers to the service identification information associated with this word, to thereby identify the post-relevant service.

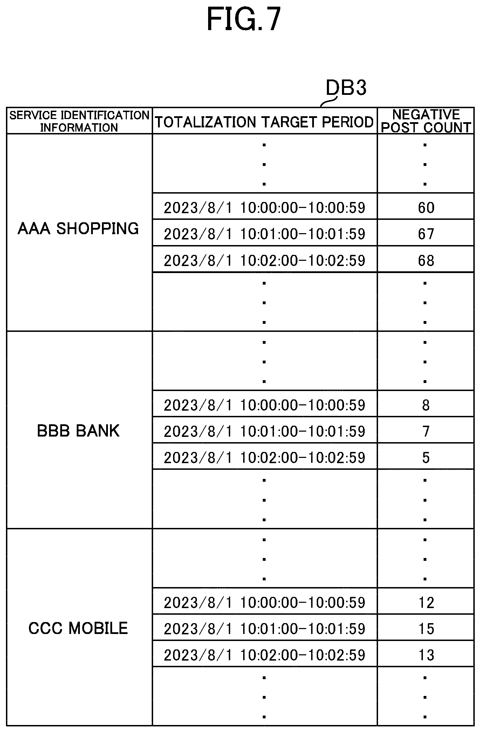

FIG. 7 is a table for showing an example of the anomaly detection database DB3. The anomaly detection database DB3 is a database which stores data relating to the anomaly detection of each of the plurality of services. For example, in the anomaly detection database DB3, service identification information, totalization target periods, and negative post counts are stored. In the anomaly detection database DB3, any data relating to the anomaly detection may be stored. For example, in the anomaly detection database DB3, change amounts of the negative post counts, or another index other than the negative post count may be stored.

In the example of FIG. 7, a case in which the service name corresponds to the service identification information is exemplified. The service identification information is only required to be information which allows identification of each service. For example, the service identification information may be an ID of the service, the business operator name, or other information. In the example of FIG. 7, a case in which the totalization target period is one minute is shown, but the totalization target period may be any length as described above. The totalization target period may be different for each service. The negative post count is calculated by the anomaly detection module 104 described later.

The data stored in the data storage unit 100 is not limited to the above-mentioned example. The data storage unit 100 can store any data relating to the anomaly detection. For example, the data storage unit 100 stores various types of threshold values referred to at the time of the anomaly detection, a program required for processing of the anomaly detection, or other data.

### [Post Data Acquisition Module]

The post data acquisition module 101 acquires each of the plurality of pieces of post data in the social networking service (SNS). In this embodiment, the post data acquisition module 101 refers to the post database DB1, to thereby acquire each of the plurality of pieces of post data. For example, the post data acquisition module 101 acquires the post data having the post time within the totalization target period. The post data acquisition module 101 may acquire the post data independently of the totalization target period. The post data acquisition module 101 may acquire each of the plurality of pieces of post data from another computer (for example, the SNS server 20) other than the anomaly detection server 10 or an information storage medium.

### [Post-Relevant Service Identification Module]

The post-relevant service identification module 102 identifies the post-relevant service that is relevant to each of the plurality of pieces of post data out of the plurality of services being the targets of the anomaly detection. In this embodiment, a case in which the posted content indicated by the post data is a character string (text) is described, but the posted content may be an image or a moving image. The posted content may be a combination of two or more of a character string, an image, and a moving image. The posted content indicated by the post data may include not only a body of the post, but information indicating classification of the post such as a hashtag.

The post-relevant service identification module 102 identifies, for the post data, at least one post-relevant service. The post-relevant service identification module 102 sometimes identifies, for the post data, a plurality of post-relevant services. In the SNS, there exists post data irrelevant to the service being the target of the anomaly detection, and hence the post-relevant service identification module 102 sometimes does not identify, for the post data, the post-relevant service.

For example, for each service, a determination criterion used to determine whether or not the posted content relates to this service is provided. The post-relevant service identification module 102 determines whether or not the post data satisfies the determination criterion of each of the plurality of services. The post-relevant service identification module 102 determines whether or not the post data satisfies the determination criterion. When a service the post determination criterion of which is satisfied by the post data exists, the post-relevant service identification module 102 identifies this service as the post-relevant service. When a service the post determination criterion of which is satisfied by the post data does not exist, the post data does not relate to the service being the target of the anomaly detection, and hence the post-relevant service identification module 102 does not identify the post-relevant service.

It is only required that the determination criterion be a criterion with which the determination can be made based on the content (for example, text, image, or moving image) of the post. The determination criterion may be any criterion. Whether or not the posted content includes the word in the dictionary database DB2 is an example of the determination criterion. In this embodiment, the post-relevant service identification module 102 identifies, based on each of the plurality of pieces of post data and the dictionary database DB2 in which the words specific to each of the plurality of services are registered, the post-relevant service of this piece of post data. The post-relevant service identification module 102 determines whether or not the word stored in the dictionary database DB2 of each of the plurality of services is included in the post data.

For example, when the post data includes a word stored in the dictionary database DB2 of a certain service, the post-relevant service identification module 102 identifies, as the post-relevant service, the service corresponding to the dictionary database DB2 in which this word is stored. When the post data includes "n" ("n" is an integer of two or more) or more words stored in the dictionary database DB2 of a certain service, the post-relevant service identification module 102 may identify, as the post-relevant service, the service corresponding to the dictionary database DB2 in which those words are stored. The post-relevant service identification module 102 may identify, as the post-relevant service, a service the dictionary database DB2 of which stores a relatively large number of words included in the post data out of the plurality of services.

The determination criterion may be another criterion other than the dictionary database DB2. The post-relevant service identification module 102 may identify the post-relevant service based on another determination criterion other than the dictionary database DB2. For example, the determination criterion is not required to be the state in which the post data includes the word stored in the dictionary database DB2 in which the plurality of words are stored, but may be a state in which the post data simply indicates the service name. In this case, the post-relevant service identification module 102 identifies, as the post-relevant service, the service having the service name indicated by the post data. For example, when the post data includes an image or a moving image, the post-relevant service identification module 102 may execute image analysis for the image or the moving image included in the post data, to thereby identify the post-relevant service. This image analysis may be any method such as optical character recognition or pattern matching, or the like.

For example, the determination criterion may be output of a learning model using a method of machine learning. The method of machine learning may be publicly-known various methods. For example, the learning model may be generated through any one of supervised learning, semi-supervised learning, and unsupervised learning. The learning model may be a model used in natural language processing or image analysis. The learning model has learned training data including post data for training and a label indicating at least one of the plurality of services. The post-relevant service identification module 102 inputs the post data to the learning model. The learning model calculates a feature amount of the post data, and outputs a label corresponding to this feature amount. The post-relevant service identification module 102 may identify the service indicated by the label as the post-relevant service.

### [Sentiment Analysis Execution Module]

The sentiment analysis execution module 103 executes sentiment analysis for each of the plurality of pieces of post data. The sentiment analysis is processing of analyzing sentiment of the poster. As a method for the sentiment analysis itself, publicly known various methods can be used. In this embodiment, a case in which the sentiment analysis execution module 103 executes dictionary-based sentiment analysis is exemplified, but the sentiment analysis execution module 103 may execute a machine-learning-based sentiment analysis, a pattern-based sentiment analysis, or a rule-based sentiment analysis. In this embodiment, a case in which the sentiment analysis execution module 103 analyzes whether or not the post data is negative based on a publicly-known method for the sentiment analysis is exemplified. The sentiment analysis execution module 103 may analyze whether or not the post data is positive based on a publicly-known method for the sentiment analysis.

For example, the sentiment analysis execution module 103 determines whether or not each of the plurality of pieces of post data includes the negative expression, to thereby execute the sentiment analysis of the posted content. The negative expression is a word indicating a negative meaning. The negative expression itself may be an expression used in a publicly-known sentiment analysis method. The sentiment analysis execution module 103 determines whether or not the post data includes the negative expression based on a negative expression database being a dictionary in which the negative expressions are stored. The sentiment analysis execution module 103 identifies post data including the negative expression. The sentiment analysis execution module 103 may identify post data including "m" ("m" is an integer of two or more) or more negative expressions.

A user who has posted a word relevant to the anomaly may have a negative sentiment to the service, and hence the sentiment analysis execution module 103 may determine whether or not the post data includes not a negative expression, but a word relevant to the anomaly, to thereby execute the sentiment analysis. In this case, the sentiment analysis execution module 103 executes the sentiment analysis for the post data based on an anomaly-relevant database being a dictionary in which words relevant to the anomaly are stored.

Moreover, the sentiment analysis execution module 103 may execute the sentiment analysis for the post data based on a learning model which has learned training data indicating a relationship between post data for training and a result (for example, a label indicating whether or not the sentiment is negative) of the sentiment analysis for this post data. This learning model may be any one method of supervised learning, semi-supervised learning, and unsupervised learning. The sentiment analysis execution module 103 inputs post data being a target of the sentiment analysis to the learning model. The learning model calculates a feature amount of this post data, and outputs a result of the sentiment analysis corresponding to the feature amount. The sentiment analysis execution module 103 acquires the output from the learning model.

### [Anomaly Detection Module]

The anomaly detection module 104 detects an anomaly relating to each of the plurality of services based on the post-relevant service identified for each of the plurality of pieces of post data and the result of the sentiment analysis executed for each of the plurality of pieces of post data. The detection of the anomaly may be considered as determination or estimation of the anomaly.

For example, an anomaly detection criterion being a criterion of the anomaly detection is provided for each service. The anomaly detection criterion may be common to the plurality of services. The anomaly detection module 104 determines whether or not the anomaly detection criterion for each of the plurality of services is satisfied based on the post-relevant service identified for each of the plurality of pieces of post data and the result of the sentiment analysis executed for each of the plurality of pieces of post data. The anomaly detection module 104 detects the anomaly of the service the anomaly detection criterion of which is satisfied. The anomaly detection module 104 does not detect the anomaly of the service the anomaly detection criterion of which is not satisfied.

In this embodiment, a case in which the anomaly detection criterion is the negative post count is exemplified. For example, the anomaly detection module 104 calculates, for each service, the negative post count being the number of pieces of post data including the negative expression and detects the anomaly of each of the plurality of services based on the negative post count of each of the plurality of services. The anomaly detection module 104 stores a calculation result of the negative post count in the anomaly detection database DB3. In this embodiment, the anomaly detection module 104 calculates the negative post count for each totalization target period. The anomaly detection module 104 refers to the post time of the post data for which a certain post-relevant service is identified, and calculates the negative post count of this post-relevant service based on the result of the sentiment analysis for the post data having the post time included in the totalization target period.

For example, the anomaly detection module 104 detects the anomaly of a service that has the negative post count equal to or larger than a threshold value out of the plurality of services. The threshold value may be common to all of the services or may be defined for each service. The threshold value may be common to all of the totalization target periods or may be defined for each totalization target period. The threshold value may be specified by the administrator or may be determined in accordance with a past record of the posts relevant to each service. The anomaly detection module 104 may detect the anomaly of the service when the negative post count in one certain totalization target period becomes equal to or larger than the threshold value. The anomaly detection module 104 may detect the anomaly of the service when the negative post count in a continuous plurality of totalization target periods becomes equal to or larger than the threshold value.

For example, the anomaly detection module 104 increments, when a negative expression is included in the post data of a certain post-relevant service, the negative post count of this post-relevant service. The anomaly detection module 104 may increment, when "m" or more negative expressions are included in the post data of a certain post-relevant service, the negative post count of this post-relevant service. When the machine-learning-based, pattern-based, or rule-based sentiment analysis method is used, the anomaly detection module 104 may increment, when the post data of a certain post-relevant service is estimated to be a negative post through this sentiment analysis method, the negative post count of this post-relevant service.

For example, the anomaly detection module 104 detects the anomaly of each of the plurality of services based on a time-series change in the negative post count of each of the plurality of services. The anomaly detection module 104 calculates a change amount (increase amount) between the negative post count in a certain totalization target period and the negative post count in a next totalization target period. The anomaly detection module 104 detects the anomaly of a service that has the change amount equal to or larger than a threshold value out of the plurality of services. This threshold value may be common to all of the services or may be defined for each service. This threshold value may be common to all of the totalization target periods or may be defined for each totalization target period. The anomaly detection module 104 may calculate the change amount across three or more totalization target periods, to thereby detect the anomaly.

For example, the anomaly detection module 104 detects the anomaly relating to a configuration specific to a service that has a relatively large negative post count out of the plurality of services. The specific configuration is a configuration (for example, hardware or software) used only in a certain service. For example, the configuration specific to the certain service is a server computer which the user accesses in order to use this service, software installed on this server computer, another computer cooperating with this server computer, or software installed on the user terminal 30. The anomaly detection module 104 detects, when the negative post count of only a specific service of the plurality of services is equal to or larger than the threshold value, the anomaly relating to the configuration specific to this specific service.

For example, the anomaly detection module 104 detects, when each of a plurality of services has the negative post count equal to or larger than the threshold value, the anomaly relating to a configuration common to the plurality of services. The configuration common to the plurality of services is a configuration (for example, hardware or software) used not only in a specific service but in each of the plurality of services. For example, the configuration common to the plurality of services is another computer cooperating with the server computer of each of the plurality of services, software installed on this another computer, a computer cooperating with this another computer, or software installed on the user terminal 30 and common to the plurality of services (for example, so-called "super app"). The anomaly detection module 104 detects, when the plurality of services uniformly have the negative post counts each equal to or larger than the threshold value, the anomaly relating to a configuration common to the plurality of services.

The methods for the anomaly detection module 104 to detect the anomaly are not limited to the above-mentioned examples. For example, the anomaly detection module 104 may detect the anomaly based on a learning model using a method of machine learning. In this case, the learning model has learned training data having, as input, a post-relevant service specified for post data for training and a result of the sentiment analysis for this post data and, as output, absence or presence of the anomaly. The learning model may be any one method of supervised learning, semi-supervised learning, and unsupervised learning. The anomaly detection module 104 inputs, to the learning model, the post-relevant service and the sentiment analysis result of each of the plurality of pieces of post data. The learning model calculates a feature amount of the input data, and outputs the absence or presence of the anomaly corresponding to the feature amount. The anomaly detection module 104 acquires the output from the learning model, to thereby detect the anomaly.

### [3-2. Functions Implemented in SNS Server]

For example, the SNS server 20 includes a data storage unit 200 and an SNS provision module 201. The data storage unit 200 is implemented by the storage unit 22. The SNS provision module 201 is implemented by the control unit 21.

### [Data Storage Unit]

The data storage unit 200 stores data relating to the SNS. For example, the data storage unit 200 stores post data relating to the posts posted to the SNS. The data storage unit 200 may store the same database as the post database DB1 or may store a database having a data structure different from that of the post database DB1. The data storage unit 200 can store publicly-known various types of data in the SNS.

### [SNS Provision Module]

The SNS provision module 201 provides the SNS to each of the plurality of users. Processing of the SNS provision module 201 may be processing executed in a publicly-known SNS. For example, the SNS provision module 201 causes the user terminal 30 to display a screen relating to the post of the SNS. The SNS provision module 201 receives, from the user terminal 30, data relating to the post input by the user. The SNS provision module 201 records, based on this data, the post data in the data storage unit 200. The SNS server 20 transmits the post data to the anomaly detection server 10.

### [3-3. Functions Implemented in User Terminal]

For example, the user terminal 30 includes a data storage unit 300 and a posting module 301. The data storage unit 300 is implemented by the storage unit 32. The posting module 301 is implemented by the control unit 31.

### [Data Storage Unit]

The data storage unit 300 stores data required for the user to use the SNS. For example, the data storage unit 300 stores a browser or an application dedicated to the SNS. The data storage unit 300 may store data required by the user to use at least one of the plurality of services.

### [Posting Module]

The posting module 301 transmits, to the SNS server 20, data relating to the post input by the user.

### [3-4. Functions Implemented in Administrator Terminal]

For example, the administrator terminal 40 includes a data storage unit 400, an operation reception module 401, and a display control module 402. The data storage unit 400 is implemented by the storage unit 42. The operation reception module 401 and the display control module 402 are implemented by the control unit 41.

### [Data Storage Unit]

The data storage unit 400 stores data required for a task of the administrator. For example, the data storage unit 400 stores data required to display an administrator screen SC. The data storage unit 400 may store a maintenance tool required for the task of the administrator. The maintenance tool itself may be a publicly-known tool, and, for example, is only required to be a tool capable of monitoring a state of at least one of the hardware or the software.

### [Operation Reception Module]

The operation reception module 401 receives various operations by the administrator. For example, the operation reception module 401 receives the operation on the administrator screen SC.

### [Display Control Module]

The display control module 402 displays various screens on the display unit 45. For example, the display control module 402 displays the administrator screen SC on the display unit 45.

### [4. Processing Executed in Anomaly Detection System]

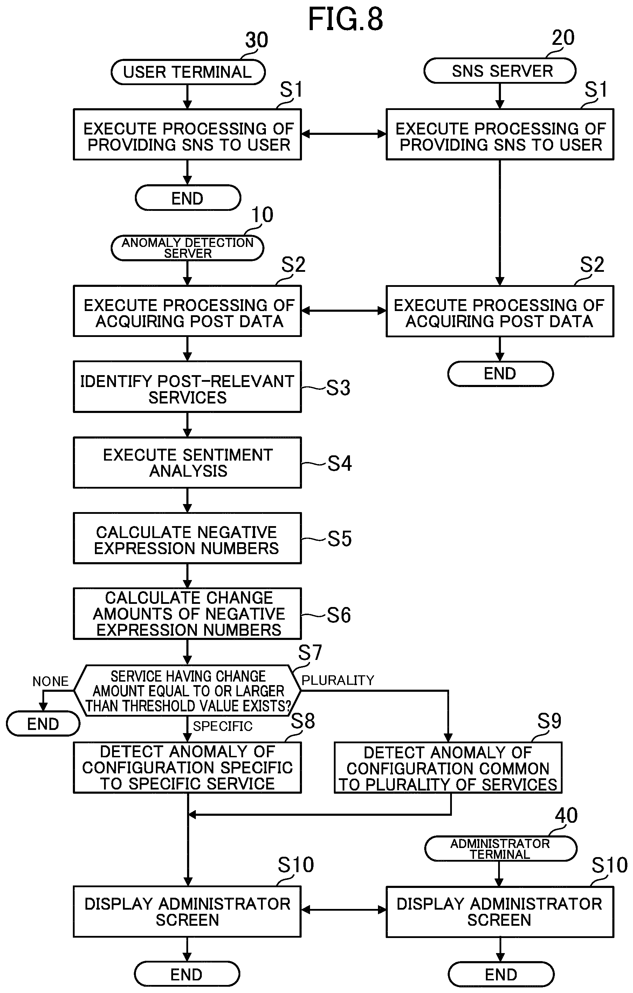

FIG. 8 is a diagram for illustrating an example of processing executed in the anomaly detection system 1. The processing of FIG. 8 is executed by the control units 11, 21, 31, and 41 executing programs stored in the storage units 12, 22, 32, and 42, respectively. Processing of each step of FIG. 8 is an example of a step included in the anomaly detection method according to the present disclosure.

As illustrated in FIG. 8, the SNS server 20 executes the processing of providing the SNS to the user between the SNS server 20 and the user terminal 30 (Step S1). In Step S1, the SNS server 20 receives, from the user terminal 30, the data relating to the post input by the user. The SNS server 20 generates the post data and records the generated post data in the storage unit 22. The anomaly detection server 10 executes the processing of acquiring the post data between the anomaly detection server 10 and the SNS server 20 (Step S2). In Step S2, the SNS server 20 transmits, to the anomaly detection server 10, all or a part of the post data in the SNS. The anomaly detection server 10 stores the post data acquired from the SNS server 20 in the post database DB1.

The anomaly detection server 10 identifies the post-relevant services relevant to the post data based on the dictionary database DB2 (Step S3). The processing step of Step S3 is as described as the processing by the post-relevant service identification module 102. The anomaly detection server 10 executes the sentiment analysis for the post data (Step S4). The processing step of Step S4 is as described as the processing by the sentiment analysis execution module 103. The subsequent processing steps of Step S5 to Step S11 correspond to the processing by the anomaly detection module 104.

The anomaly detection server 10 calculates the negative expression number of each of the plurality of services in the totalization target period (Step S5). The calculation result obtained in Step S5 is stored in the anomaly detection database DB3. The anomaly detection server 10 calculates the change amount of the negative expression number of each of the plurality of services based on the anomaly detection database DB3 (Step S6). The anomaly detection server 10 determines whether or not a service having the change amount calculated in Step S6 equal to or larger than the threshold value exists (Step S7).

In Step S7, when the change amount of a specific service is determined to be equal to or larger than the threshold value ("specific" in Step S7), the anomaly detection server 10 detects the anomaly of a configuration specific to this specific service (Step S8). The anomaly detection server 10 executes, between the anomaly detection server 10 and the administrator terminal 40, the processing of displaying the administrator screen SC (Step S9), and this processing is ended. In Step S7, when the change amount of each of a plurality of services is determined to be equal to or larger than the threshold value ("plurality" in Step S7), the anomaly detection server 10 detects the anomaly of a configuration common to the plurality of services (Step S10), and the process proceeds to Step S9. In Step S7, when the change amount of none of the services is determined to be equal to or larger than the threshold value ("none" in Step S7), this processing is ended.

### [5. Summary of Embodiment]

The anomaly detection system 1 according to this embodiment detects an anomaly relating to each of the plurality of services based on the post-relevant service identified for each of the plurality of pieces of post data in the SNS and the result of the sentiment analysis executed for each of the plurality of pieces of post data. The anomaly detection system 1 can use the post data directly reflecting opinions of the users on the service to appropriately detect the anomaly relating to not only one certain service, but each of the plurality of services. For example, when an anomaly occurs in any one of the plurality of services, and even when an anomaly is not detected in the index such as a CPU usage rate of the server computer used for this service, a user who actually uses the service sometimes feels a sense of discomfort. The user sometimes executes a post indicating a possibility of an occurrence of the anomaly in the service in real time, and hence the anomaly detection system 1 can quickly detect the anomaly by analyzing the post data on such a post.

Moreover, the anomaly detection system 1 identifies, based on each of the plurality of pieces of post data and the dictionary database DB2 in which the words specific to each of the plurality of services are registered, the post-relevant service of this piece of post data. With this configuration, the anomaly detection system 1 can accurately identify the service to which the post data is relevant. As a result, the accuracy of the anomaly detection increases. For example, the anomaly detection system 1 can also identify the service to which the post data is relevant by determining whether or not the service name is included in the post data. However, in this case, when the service name is not included in the post data, the anomaly detection system 1 considers that the post data is irrelevant to the service, and comes to stop referring to the post data for the anomaly detection. In this respect, the anomaly detection system 1 can use the dictionary database DB2 to identify the service to which the post data is relevant even when the service name is not included in the post data. As a result, the anomaly detection system 1 can refer to a larger amount of post data for the anomaly detection, and hence the accuracy of the anomaly detection increases.

Moreover, the anomaly detection system 1 determines whether or not each of the plurality of pieces of post data includes the negative expression, to thereby execute the sentiment analysis of the posted content. The anomaly detection system 1 calculates, for each service, the negative post count which is the number of pieces of post data including the negative expression. The anomaly detection system 1 detects the anomaly of each of the plurality of services based on the negative post count of each of the plurality of services. With this configuration, the anomaly detection system 1 detects the anomaly based on the index such as the negative post count directly leading to the anomaly detection, and hence the accuracy of the anomaly detection increases. For example, the anomaly detection system 1 can present to the administrator a comprehensible index such as the negative post count by displaying the negative post count of each service on the administrator screen SC.

Moreover, the anomaly detection system 1 detects the anomaly of each of the plurality of services based on the time-series change in the negative post count of each of the plurality of services. With this configuration, the anomaly detection system 1 detects the anomaly based on the index such as the time-series change in the negative post count directly leading to the anomaly detection, and hence the accuracy of the anomaly detection increases. For example, the anomaly detection system 1 can present to the administrator a comprehensive index such as the change in the negative post count by displaying the time-series change in the negative post count of each service on the administrator screen SC.

Moreover, the anomaly detection system 1 detects the anomaly relating to a configuration specific to a service that has a relatively large negative post count out of the plurality of services. With this configuration, the anomaly detection system 1 can detect the occurrence of the anomaly in the configuration specific to a certain specific service, and hence a cause of the anomaly can accurately be estimated. As a result, the service in which the anomaly has occurred can earlier be recovered.

Moreover, the anomaly detection system 1 detects, when each of a plurality of services has the negative post count equal to or larger than the threshold value, the anomaly relating to a configuration common to the plurality of services. As a result, the anomaly detection system 1 can detect the occurrence of the anomaly in the configuration common to the plurality of services, and hence a cause of the anomaly can accurately be estimated. As a result, each of the plurality of services in which the anomaly has occurred can earlier be recovered.

### [6. Modification Examples]

The present disclosure is not limited to the above-mentioned embodiment. The present disclosure may appropriately be modified without departing from the purport of the present disclosure.

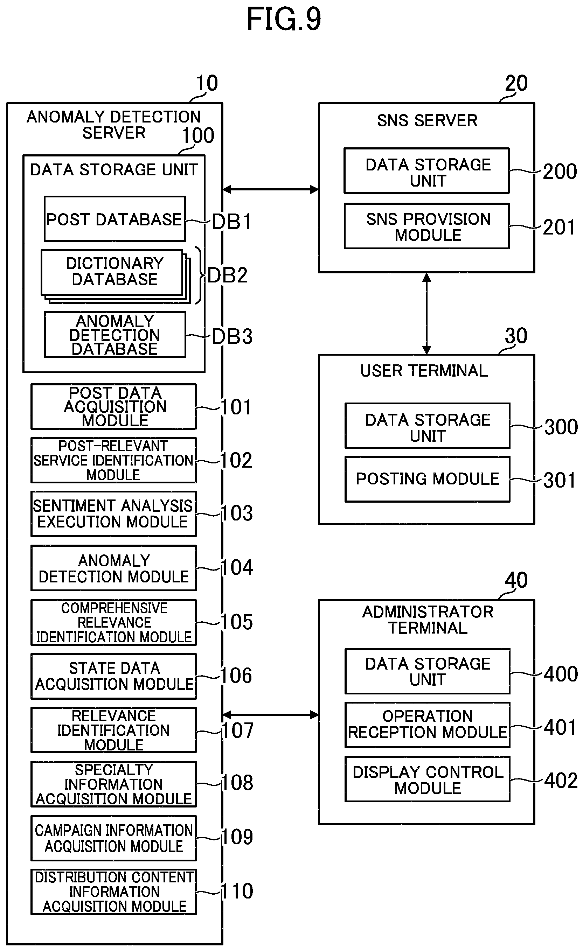

FIG. 9 is a diagram for illustrating an example of functions implemented in an anomaly detection system 1 in modification examples. The anomaly detection system 1 in the modification examples includes a comprehensive relevance identification module 105, a state data acquisition module 106, a relevance identification module 107, a specialty information acquisition module 108, a campaign information acquisition module 109, and a distribution content information acquisition module 110. The comprehensive relevance identification module 105, the state data acquisition module 106, the relevance identification module 107, the specialty information acquisition module 108, the campaign information acquisition module 109, and the distribution content information acquisition module 110 are implemented by the control unit 11.

### [6-1. Modification Example 1]

For example, in the embodiment, the case in which the post-relevant service identification module 102 identifies whether or not each piece of post data is relevant to a specific service has been exemplified. Some post data indicates comprehensive posted content across a plurality of services. For example, when one certain business operator provides a plurality of services, the user sometimes inputs, as a comprehensive post across the plurality of services, a post including a name of this business operator. For example, when a business operator which provides a plurality of services uses a common name, the user sometimes inputs a post including this common name as a comprehensive post across the plurality of services. The anomaly detection system 1 may detect the anomaly based on the post data indicating such a post.

The anomaly detection system 1 in Modification Example 1 includes the comprehensive relevance identification module 105. The comprehensive relevance identification module 105 identifies the post data comprehensively relevant to the plurality of services based on each of the plurality of pieces of post data. For example, a determination criterion indicating the posted content comprehensively relevant to the plurality of services is provided. The comprehensive relevance identification module 105 determines whether or not the post data satisfies the determination criterion of each of the plurality of services. The comprehensive relevance identification module 105 determines whether or not the post data satisfies the determination criterion. When the post data satisfies the post determination criterion, the comprehensive relevance identification module 105 identifies this post data as post data comprehensively relevant to the plurality of services.

The determination criterion in Modification Example 1 may be any criterion. A state in which the post data includes a word of a dictionary in which words each comprehensively indicating the plurality of services are registered is an example of the determination criterion. For example, the comprehensive relevance identification module 105 identifies, based on each of the plurality of pieces of post data and the database in which words of a dictionary in which words each comprehensively indicating the plurality of services are registered are registered, the post data comprehensively relevant to the plurality of services. When the post data includes the word registered in this database, the comprehensive relevance identification module 105 identifies the post data comprehensively relevant to the plurality of services. When the post data includes "k" ("k" is an integer of two or more) or more words stored in this database, the comprehensive relevance identification module 105 may identify the post data comprehensively relevant to the plurality of services.

The determination criterion may be another criterion other than the dictionary database. For example, the determination criterion is not required to be the criterion that the post data includes the word stored in the database in which the plurality of words are stored, but may be a state in which the post data simply indicates the name of the business operator which provides a plurality of services or the name common to a plurality of business operators. In this case, when the post data indicates one of those names, the comprehensive relevance identification module 105 identifies this post data as post data comprehensively relevant to the plurality of services.

For example, the determination criterion may be output of a learning model using a method of machine learning. The method of machine learning may be publicly-known various methods. For example, the learning model may be generated through any one of supervised learning, semi-supervised learning, and unsupervised learning. The learning model may be a model used in natural language processing or image analysis. The learning model has learned training data including post data for training and a label indicating whether or not the post data is comprehensively relevant to the plurality of services. The comprehensive relevance identification module 105 inputs the post data to the learning model. The learning model calculates a feature amount of the post data, and outputs a label corresponding to this feature amount. The comprehensive relevance identification module 105 may refer to the label output from the learning model, to thereby identify post data comprehensively relevant to the plurality of services.

The sentiment analysis execution module 103 in Modification Example 1 also executes the sentiment analysis for the post data identified by the comprehensive relevance identification module 105. The method for the sentiment analysis is as described in the embodiment. The anomaly detection module 104 in Modification Example 1 detects the anomaly relating to each of the plurality of services based further on the post data identified by the comprehensive relevance identification module 105. For example, the anomaly detection module 104 calculates the negative expression number of the post data identified by the comprehensive relevance identification module 105.

For example, the anomaly detection module 104 detects the anomaly of the configuration common to the plurality of services when the negative expression number of the post data identified by the comprehensive relevance identification module 105 is equal to or larger than a threshold value. The anomaly detection module 104 calculates a change amount of the negative expression number of the post data identified by the comprehensive relevance identification module 105. The anomaly detection module 104 detects the anomaly of the configuration common to the plurality of services when this change amount is equal to or larger than the threshold value. The anomaly detection module 104 may detect the anomaly of the configuration common to the plurality of services based on the post data identified by the comprehensive relevance identification module 105 and another method such as the learning model described in the embodiment.

The anomaly detection system 1 in Modification Example 1 identifies the post data comprehensively relevant to the plurality of services based on each of the plurality of pieces of post data. The anomaly detection system 1 detects the anomaly relating to each of the plurality of services based further on the post data identified by the comprehensive relevance identification module 105. With this configuration, the anomaly detection system 1 can appropriately detect the anomaly comprehensively relevant to the plurality of services.

### [6-2. Modification Example 2]

For example, the anomaly detection system 1 may use not only the post data in the SNS, but also state data relating to a state of a device used in each of the plurality of services, to thereby detect the anomaly. The anomaly detection system 1 in Modification Example 2 includes the state data acquisition module 106. The state data acquisition module 106 acquires state data relating to a state of a device used in each of the plurality of services. The device is a type of the hardware described in the embodiment. For example, the device is a server computer, a personal computer, a tablet computer, a smartphone, another computer, a communication device, a memory, or a power supply.

The state data may indicate a pinpoint state of a device at a certain time point, but in Modification Example 2, it is assumed that the state data is data relating to a time-series change in the state of the device. The state of the device is also considered as a load on a device which provides the service. The state of the device may mean a hardware state, or may mean a software state. For example, the state of the device may be a communication amount, a CPU usage amount, a memory usage amount, a power consumption amount, a communication speed, a temperature, or a combination thereof. The state of the device may be an index called golden signal metrics, or another index used in a publicly-known benchmark test. An acquisition method for the state data on the device may also be a publicly-known method.

The data storage unit 100 in Modification Example 2 stores the state data acquired from a system of each of the plurality of services. The state data acquisition module 106 acquires the state data stored in the data storage unit 100. The state data acquisition module 106 may acquire the state data from the system of each of the plurality of services. For example, the state data acquisition module 106 periodically requests the state data from the system of each of the plurality of services. Each system transmits, to the anomaly detection server 10, the newest state data in response to the request. The state data acquisition module 106 periodically acquires the newest state data from each system.

The anomaly detection module 104 in Modification Example 2 detects the anomaly relating to each of the plurality of services based further on the state data on each of the plurality of services. For example, the anomaly detection module 104 detects, when a service that has a numerical value which is indicated by the state data and is equal to or larger than a threshold value exists out of the plurality of services, the anomaly relating to this service. The anomaly detection module 104 may detect, when a service that has a numerical value which is indicated by the state data and a change amount of which is equal to or larger than a threshold value exists out of the plurality of services, the anomaly relating to this service. The anomaly detection module 104 may input, to a model generated through use of a method of machine learning, the time-series change in state data, to thereby detect the anomaly.

For example, the anomaly detection module 104 may determine that an anomaly has occurred when the anomaly is detected through both of the anomaly detection method based on the post data on the SNS described in the embodiment and the anomaly detection method based on the state data described in Modification Example 2. The anomaly detection module 104 may determine that an anomaly has occurred when the anomaly is detected through any one of the anomaly detection method based on the post data on the SNS described in the embodiment or the anomaly detection method based on the state data described in Modification Example 2. It is assumed that information indicating the service to which the device being the source of the acquisition of the state data belongs is stored in the data storage unit 100. The anomaly detection module 104 detects, in a case in which the numerical value indicated by a certain piece of state data becomes equal to or larger than a threshold value or the like, the anomaly of the service associated with this state data.

The anomaly detection system 1 in Modification Example 2 acquires the state data relating to the state of the device used in each of the plurality of services. The anomaly detection system 1 detects the anomaly relating to each of the plurality of services based further on the state data on each of the plurality of services. The anomaly detection system 1 can increase the accuracy of the detection of the anomaly by using both of the post data in the SNS and the state data on the device.

### [6-3. Modification Example 3]

For example, various devices exist as devices used to provide the services. Among the state data in Modification Example 2, some state data relates to the anomaly and other state data does not closely relate to the anomaly. Thus, the anomaly detection server 10 may identify the state data relevant to the post data of the SNS from various types of state data. This state data is hereinafter referred to as "relevant data." The anomaly detection server 10 may detect the anomaly based on the relevant data out of the plurality of pieces of state data. It is assumed that the state data other than the relevant data is not used for the anomaly detection.

The anomaly detection system 1 in Modification Example 3 includes the relevance identification module 107. The relevance identification module 107 identifies, out of the plurality of pieces of state data on each of the plurality of services, the relevant data relevant to the post data the identified post-relevant service of which is this service. The relevance is a correlation with the post data. For example, in a case in which, when an increase amount of the post data becomes equal to or larger than a threshold value, an increase amount of the state data also becomes equal to or larger than a threshold value, the post data and the state data have the relevance. In a case in which, when a decrease amount of the post data becomes equal to or larger than a threshold value, a decrease amount of the state data also becomes equal to or larger than a threshold value, the post data and the state data have the relevance.

For example, in a case in which a time difference between a timing of a change in the post data and a timing of a change in the state data is smaller than a threshold value, the post data and the state data have the relevance. In a case in which the time difference between the timing of the change in the post data and the timing of the change in the state data steadily falls within a predetermined range, the post data and the state data have the relevance. For example, the relevance identification module 107 calculates, for each service, the time-series change in the negative post count based on each of the plurality of pieces of post data. This calculation method is as described in the embodiment.

For example, the relevance identification module 107 executes, based on a publicly-known clustering method, clustering of the time-series change in the negative post count in each of the plurality of services and the time-series change in the state indicated by each of the plurality of pieces of state data. The clustering can be executed based on a publicly-known method. For example, the relevance identification module 107 executes the clustering based on k-means clustering, hierarchical clustering, DBSCAN clustering, or another clustering method. The relevance identification module 107 executes the clustering such that time-series changes similar to each other belong to the same cluster. The relevance identification module 107 identifies the state data that belongs to the same cluster as that of the time-series change in the negative post count of a certain service out of the plurality of pieces of state data as the relevant data relevant to the post data in this service.

The anomaly detection module 104 in Modification Example 3 detects, based on, out of the plurality of pieces of state data on each of the plurality of services, the relevant data on this service, the anomaly of this service. The anomaly detection module 104 does not refer to, in the detection of the anomaly, the state data that is not the relevant data out of the plurality of pieces of state data. The anomaly detection module 104 is different from the anomaly detection module 104 in Modification Example 2 in the point that the state data identified as the relevant data out of the plurality of pieces of state data is used for the anomaly detection, but is the same as the anomaly detection module 104 in Modification Example 2 in other points.

The anomaly detection system 1 in Modification Example 3 identifies, out of the plurality of pieces of state data on each of the plurality of services, the relevant data relevant to the post data the identified post-relevant service of which is this service. The anomaly detection system 1 detects, based on, out of the plurality of pieces of state data on each of the plurality of services, the relevant data on this service, the anomaly of this service. The anomaly detection system 1 can increase the accuracy of the detection of the anomaly by detecting the anomaly based on the state data relevant to the post data in the SNS.

### [6-4. Modification Example 4]

For example, words which directly express the anomaly and are high in specialty, such as "traffic," "access," or "system failure," are sometimes included in the post data. Such post data is considered to be particularly effective for the detection of the anomaly. Thus, the anomaly detection server 10 may consider the post data including the word high in specialty more than other post data, to thereby detect the anomaly.

The anomaly detection system 1 includes the specialty information acquisition module 108. The specialty information acquisition module 108 acquires specialty information relating to specialty of a word included in each of the plurality of pieces of post data. The specialty information indicates a degree of specialty of a word. In Modification Example 4, a case in which the specialty information is expressed as a numerical value is exemplified, but the specialty information may be expressed as a character or a symbol. In Modification Example 4, a higher numerical value indicated by the specialty information means higher specialty. The specialty information on the word may be stored in the dictionary database DB2, or may be stored in another database different from the dictionary database DB2.

The anomaly detection module 104 in Modification Example 4 detects the anomaly of each of the plurality of services based further on the specialty information on each of the plurality of pieces of post data. For example, when certain post data includes the negative expression and a word associated with the specialty information, the anomaly detection module 104 increases the negative post count based on the specialty indicated by the specialty information associated with this word. The anomaly detection module 104 calculates the negative post count such that the negative post count increases more as the specialty indicated by the specialty information is higher. In the embodiment, the case in which the negative post count increases by one as long as certain post data includes the negative expression regardless of a property of this post has been exemplified, but, in Modification Example 4, when the specialty indicated by the specialty information is high, the negative post count increases by a numerical value equal to or larger than 2 for one piece of post data.

For example, it is assumed that the specialty indicated by the specialty information has three levels. When the negative expression is included in the post data including a word having the specialty at the level 3, the anomaly detection module 104 increases the negative post count by three for this one piece of post data. When the negative expression is included in the post data including a word having the specialty at the level 2, the anomaly detection module 104 increases the negative post count by two for this one piece of post data. When the negative expression is included in the post data including a word having the specialty at the level 1, the anomaly detection module 104 increases the negative post count by one for this one piece of post data.

The processing by the anomaly detection module 104 in Modification Example 4 is not limited to the above-mentioned example. For example, when the anomaly detection module 104 detects the anomaly based on another index other than the negative post count, the anomaly detection module 104 is only required to consider the specialty information in calculation of the another index. When post data including a word associated with the specialty information exists in a certain service, the anomaly detection module 104 calculates the index of this service such that the index of this service is higher as the specialty indicated by this specialty information is higher. It is assumed that a calculation expression required to calculate the index is stored in the data storage unit 100.

The anomaly detection system 1 in Modification Example 4 acquires the specialty information relating to the specialty of a word included in each of the plurality of pieces of post data. The anomaly detection system 1 detects the anomaly of each of the plurality of services based further on the specialty information on each of the plurality of pieces of post data. With this configuration, the anomaly detection system 1 can detect the anomaly by more considering the post data including a word having a higher specialty, and hence the accuracy of the anomaly detection increases.

### [6-5. Modification Example 5]

For example, in a case in which a campaign for a certain service is held, the number of posts of this service in the SNS sometimes increases even when an anomaly does not occur in this service. Further, some users may input posts having negative expressions about content of the campaign. Such posts possibly form noise in the anomaly detection. Thus, the anomaly detection server 10 may change the determination criterion for the anomaly detection in consideration of whether or not the campaign is held.

The anomaly detection system 1 in Modification Example 5 includes the campaign information acquisition module 109. The campaign information acquisition module 109 acquires campaign information relating to a campaign in each of the plurality of services. The campaign information indicates identification information on the service for which a campaign is held and a period in which the campaign is held. The campaign information may indicate content of the campaign. It is assumed that the campaign information is stored in the data storage unit 100. The campaign information may be registered in the data storage unit 100 by the administrator, or may be registered in the data storage unit 100 by another person.

The anomaly detection module 104 in Modification Example 5 detects the anomaly of each of the plurality of services based further on the campaign information. For example, the anomaly detection module 104 identifies a service for which a campaign is held from the plurality of services based on the campaign information. The anomaly detection module 104 increases the threshold value for the detection of the anomaly of the identified service. The anomaly detection module 104 detects the anomaly based on the increased threshold value in a period of the campaign. Modification Example 5 is different from the embodiment in a determination method for the threshold value, but is the same as the embodiment in other points.

The anomaly detection system 1 in Modification Example 5 acquires the campaign information relating to the campaign in each of the plurality of services. The anomaly detection system 1 detects the anomaly of each of the plurality of services based further on the campaign information. With this configuration, the anomaly detection system 1 can achieve the anomaly detection in consideration of noise that may occur as a result of the campaign being held, and hence the anomaly can appropriately be detected even when the campaign is held.

### [6-6. Modification Example 6]

For example, the service being the target of the anomaly detection is sometimes featured in a television program, a video distribution on the Internet, or a distribution service such as a live distribution. In this case, even when the anomaly does not occur in this service, the number of posts relating to this service in the SNS sometimes increases. Further, some users may input posts having negative expressions about content of the distribution. Such posts possibly form noise in the anomaly detection. Thus, the anomaly detection server 10 may change the determination criterion for the anomaly detection in consideration of the distribution content in the distribution service.

The anomaly detection system 1 includes the distribution content information acquisition module 110. The distribution content information acquisition module 110 acquires distribution content information relating to the distribution content in a distribution service for distributing information relating to each of the plurality of services. The distribution content information indicates distribution date and time in the distribution service and distribution content in the distribution service. It is assumed that the distribution content information is stored in the data storage unit 100. The distribution content information may be registered in the data storage unit 100 by the administrator, or may be registered in the data storage unit 100 by another person. In Modification Example 6, the distribution content information indicates whether or not the content relates to the service being the target of the anomaly detection.

The anomaly detection module 104 in Modification Example 6 detects the anomaly of each of the plurality of services based further on the distribution content information. For example, the anomaly detection module 104 identifies a service featured in the distribution service from the plurality of services based on the distribution content information. The anomaly detection module 104 increases the threshold value for the detection of the anomaly of the identified service. The anomaly detection module 104 detects the anomaly based on the increased threshold value in a distribution period or periods before and after this period. Modification Example 6 is different from the embodiment in a determination method for the threshold value, but is the same as the embodiment in other points.

The anomaly detection system 1 in Modification Example 6 acquires the distribution content information relating to the distribution content in the distribution service for distributing information relating to each of the plurality of services. The anomaly detection system 1 detects the anomaly of each of the plurality of services based further on the distribution content information. With this configuration, the anomaly detection system 1 can achieve the anomaly detection in consideration of noise that may occur as a result of the distribution in the distribution service, and hence the anomaly can appropriately be detected even when the distribution in the distribution service is executed.

### [6-7. Other Modification Examples]

For example, the above-mentioned modification examples may be combined with one another.

For example, the anomaly detection system 1 can be applied to other services other than the electric commerce service, the financial service, and the communication service. For example, the anomaly detection system 1 may detect the anomaly in another service such as a travel reservation service, a payment service, an online flea market service, or a video distribution service.

For example, in the embodiment, the case in which the main processing is executed in the anomaly detection server 10 has been described, but the processing described as the processing executed in the anomaly detection server 10 may be executed in the administrator terminal 40 or another computer. The processing described as the processing executed in the anomaly detection server 10 may be distributed to a plurality of computers.

For example, the sentiment analysis execution module 103 may execute the sentiment analysis for the post data of the SNS posted by a part of the users or the other users excluding this part of the users. This part of the users may refer to users subscribing to a predetermined subscription service in this SNS and may refer to users having an activity which relates to the users, such as a frequency of the post data including the negative expression in this SNS and a login frequency in this SNS, and satisfies a predetermined condition. With this configuration, the sentiment analysis execution module 103 can omit the sentiment analysis relating to the post data of users such as a bot which may not be included in the target of the sentiment analysis. Moreover, this part of the users may refer to users each of whom has a metric which relates to the post data, such as the number of impressions in this SNS, and exceeds a predetermined value in a predetermined period at a predetermined frequency, or users each of whom has a metric which relates to an account, such as the number of followers in this SNS, and exceeds a predetermined value in a predetermined period at a predetermined frequency. With this configuration, the sentiment analysis execution module 103 can execute the sentiment analysis relating to the post data of a user having an influence corresponding to a so-called influencer. Moreover, this part of the users may refer to users having a profile in this SNS classified into a predetermined category. The sentiment analysis execution module 103 determines, for example, whether or not an account name or a profile name of the user is classified into a person category excluding character names and the like. When the account name or the profile name of the user is classified into the person category, the sentiment analysis execution module 103 executes the sentiment analysis relating to the post data posted by a user corresponding to an account image. Moreover, this part of the users may refer to users having the account images in this SNS classified into a predetermined category. The sentiment analysis execution module 103, for example, inputs the account image to a trained machine learning model, to thereby determine whether or not this account image is classified into the person category. When the account image is classified into the person category, the sentiment analysis execution module 103 executes the sentiment analysis relating to the post data posted by a user corresponding to this account image.

For example, when the post-relevant service identification module 102 cannot identify a service, the post-relevant service identification module 102 may identify, for example, based on a post time, operation information indicating a service provision situation on a service side and the like, maintenance information indicating a time period in which the service is unavailable on the service side and the like, promotion information indicating an advertisement activity such as an advertisement and news on the service side indicating a time period in which a service is planned to be provided, or system alert information on the service side, when, for example, the post time matches the operation time (service provision time) on the service side, this post as a post relevant to this service.

### [7. Supplementary Notes]

For example, the anomaly detection system may have the following configurations.
(1) An anomaly detection system, including:
   a post data acquisition module configured to acquire each of a plurality of pieces of post data in a social networking service (SNS);
   a post-relevant service identification module configured to identify a post-relevant service that is relevant to each of the plurality of pieces of post data out of a plurality of services being targets of anomaly detection;
   a sentiment analysis execution module configured to execute sentiment analysis for each of the plurality of pieces of post data; and
   an anomaly detection module configured to detect an anomaly relating to each of the plurality of services based on the post-relevant service identified for the each of the plurality of pieces of post data and a result of the sentiment analysis executed for the each of the plurality of pieces of post data.
(2) The anomaly detection system according to Item (1), wherein the post-relevant service identification module is configured to identify, based on each of the plurality of pieces of post data and a dictionary database in which a word specific to each of the plurality of services is registered, the post-relevant service of the each of the plurality of pieces of post data.
(3) The anomaly detection system according to Item (1) or (2),
   wherein the sentiment analysis execution module is configured to determine whether each of the plurality of pieces of post data includes a negative expression, to thereby execute the sentiment analysis for the each of the plurality of pieces of post data, and
   wherein the anomaly detection module is configured to calculate, for each of the plurality of services, a negative post count being the number of pieces of post data including the negative expression, and to detect the anomaly of each of the plurality of services based on the negative post count of the each of the plurality of services.
(4) The anomaly detection system according to Item (3), wherein the anomaly detection module is configured to detect the anomaly of each of the plurality of services based on a time-series change in the negative post count of the each of the plurality of services.
(5) The anomaly detection system according to Item (3) or (4), wherein the anomaly detection module is configured to detect the anomaly relating to a configuration specific to a service having a relatively large negative post count out of the plurality of services.
(6) The anomaly detection system according to any one of Items (3) to (5), wherein the anomaly detection module is configured to detect the anomaly relating to a configuration common to the plurality of services when the negative post count of each of the plurality of services is equal to or larger than a threshold value.
(7) The anomaly detection system according to any one of Items (1) to (6), further including a comprehensive relevance identification module configured to identity post data comprehensively relevant to the plurality of services based on each of the plurality of pieces of post data,
   wherein the anomaly detection module is configured to detect the anomaly relating to each of the plurality of services based further on the post data identified by the comprehensive relevance identification module.
(8) The anomaly detection system according to any one of Items (1) to (7), further including a state data acquisition module configured to acquire state data relating to a state of a device used in each of the plurality of services,
   wherein the anomaly detection module is configured to detect the anomaly relating to each of the plurality of services based further on the state data on each of the plurality of services.
(9) The anomaly detection system according to Item (8), further including a relevance identification module configured to identify, out of a plurality of pieces of the state data on each of the plurality of services, relevant data relevant to the post data the identified post-relevant service of which is a corresponding one of the plurality of services,
   wherein the anomaly detection module is configured to detect, based on, out of the plurality of pieces of the state data on each of the plurality of services, the relevant data on the corresponding one of the plurality of services, the anomaly of the corresponding one of the plurality of services.
(10) The anomaly detection system according to any one of Items (1) to (9), further including a specialty information acquisition module configured to acquire specialty information relating to specialty of a word included in each of the plurality of pieces of post data,
   wherein the anomaly detection module is configured to detect the anomaly of each of the plurality of services based further on the specialty information on the each of the plurality of pieces of post data.
(11) The anomaly detection system according to any one of Items (1) to (10), further including a campaign information acquisition module configured to acquire campaign information relating to a campaign in each of the plurality of services,
   wherein the anomaly detection module is configured to detect the anomaly of each of the plurality of services based further on the campaign information.
(12) The anomaly detection system according to any one of Items (1) to (11), further including a distribution content information acquisition module configured to acquire distribution content information relating to distribution content in a distribution service for distributing information relating to each of the plurality of services,
   wherein the anomaly detection module is configured to detect the anomaly of each of the plurality of services based further on the distribution content information.

## Claims

1. An anomaly detection system, comprising:
a post data acquisition module configured to acquire each of a plurality of pieces of post data in a social networking service (SNS);
a post-relevant service identification module configured to identify a post-relevant service that is relevant to each of the plurality of pieces of post data out of a plurality of services being targets of anomaly detection;
a sentiment analysis execution module configured to execute sentiment analysis for each of the plurality of pieces of post data; and
an anomaly detection module configured to detect an anomaly relating to each of the plurality of services based on the post-relevant service identified for the each of the plurality of pieces of post data and a result of the sentiment analysis executed for the each of the plurality of pieces of post data.

2. The anomaly detection system according to claim 1, wherein the post-relevant service identification module is configured to identify, based on each of the plurality of pieces of post data and a dictionary database in which a word specific to each of the plurality of services is registered, the post-relevant service of the each of the plurality of pieces of post data.

3. The anomaly detection system according to claim 1 or 2,
wherein the sentiment analysis execution module is configured to determine whether each of the plurality of pieces of post data includes a negative expression, to thereby execute the sentiment analysis for the each of the plurality of pieces of post data, and
wherein the anomaly detection module is configured to calculate, for each of the plurality of services, a negative post count being the number of pieces of post data including the negative expression, and to detect the anomaly of each of the plurality of services based on the negative post count of the each of the plurality of services.

4. The anomaly detection system according to claim 3, wherein the anomaly detection module is configured to detect the anomaly of each of the plurality of services based on a time-series change in the negative post count of the each of the plurality of services.

5. The anomaly detection system according to claim 3, wherein the anomaly detection module is configured to detect the anomaly relating to a configuration specific to a service having a relatively large negative post count out of the plurality of services.

6. The anomaly detection system according to claim 3, wherein the anomaly detection module is configured to detect the anomaly relating to a configuration common to the plurality of services when the negative post count of each of the plurality of services is equal to or larger than a threshold value.

7. The anomaly detection system according to claim 1 or 2, further comprising a comprehensive relevance identification module configured to identity post data comprehensively relevant to the plurality of services based on each of the plurality of pieces of post data,
wherein the anomaly detection module is configured to detect the anomaly relating to each of the plurality of services based further on the post data identified by the comprehensive relevance identification module.

8. The anomaly detection system according to claim 1 or 2, further comprising a state data acquisition module configured to acquire state data relating to a state of a device used in each of the plurality of services,
wherein the anomaly detection module is configured to detect the anomaly relating to each of the plurality of services based further on the state data on each of the plurality of services.

9. The anomaly detection system according to claim 8, further comprising a relevance identification module configured to identify, out of a plurality of pieces of the state data on each of the plurality of services, relevant data relevant to the post data the identified post-relevant service of which is a corresponding one of the plurality of services,
wherein the anomaly detection module is configured to detect, based on, out of the plurality of pieces of the state data on each of the plurality of services, the relevant data on the corresponding one of the plurality of services, the anomaly of the corresponding one of the plurality of services.

10. The anomaly detection system according to claim 1 or 2, further comprising a specialty information acquisition module configured to acquire specialty information relating to specialty of a word included in each of the plurality of pieces of post data,
wherein the anomaly detection module is configured to detect the anomaly of each of the plurality of services based further on the specialty information on the each of the plurality of pieces of post data.

11. The anomaly detection system according to claim 1 or 2, further comprising a campaign information acquisition module configured to acquire campaign information relating to a campaign in each of the plurality of services,
wherein the anomaly detection module is configured to detect the anomaly of each of the plurality of services based further on the campaign information.

12. The anomaly detection system according to claim 1 or 2, further comprising a distribution content information acquisition module configured to acquire distribution content information relating to distribution content in a distribution service for distributing information relating to each of the plurality of services,
wherein the anomaly detection module is configured to detect the anomaly of each of the plurality of services based further on the distribution content information.

13. An anomaly detection method, comprising:
a post data acquisition step of acquiring each of a plurality of pieces of post data in a social networking service (SNS) ;
a post-relevant service identification step of identifying a post-relevant service that is relevant to each of the plurality of pieces of post data out of a plurality of services being targets of anomaly detection;
a sentiment analysis execution step of executing sentiment analysis for each of the plurality of pieces of post data; and
an anomaly detection step of detecting an anomaly relating to each of the plurality of services based on the post-relevant service identified for the each of the plurality of pieces of post data and a result of the sentiment analysis executed for the each of the plurality of pieces of post data.

14. A program for causing a computer to function as:
a post data acquisition module configured to acquire each of a plurality of pieces of post data in a social networking service (SNS);
a post-relevant service identification module configured to identify a post-relevant service that is relevant to each of the plurality of pieces of post data out of a plurality of services being targets of anomaly detection;
a sentiment analysis execution module configured to execute sentiment analysis for each of the plurality of pieces of post data; and
an anomaly detection module configured to detect an anomaly relating to each of the plurality of services based on the post-relevant service identified for the each of the plurality of pieces of post data and a result of the sentiment analysis executed for the each of the plurality of pieces of post data.
